# EUROPEAN PATENT SPECIFICATION

(11) **EP 3 698 943 B1**
(45) Date of publication and mention of the grant of the patent: **19.04.2023**
(21) Application number: 20166885.2
(22) Date of filing: 03.05.2010
(51) Int. Cl.: B29C 61/00, B29C 63/00, F16L 13/02, F16L 58/18, B29C 63/42, B29C 35/08

(54) **APPARATUS AND METHOD FOR HEATING HEAT-SHRINKABLE PIPE SLEEVES**
VORRICHTUNG UND VERFAHREN ZUR ERWÄRMUNG VON WÄRMESCHRUMPFBAREN ROHRHÜLSEN
PROCÉDÉ ET APPAREIL POUR CHAUFFER DES MANCHONS DE TUYAUX THERMORÉTRACTABLES

(30) Priority: 07.05.2009 GB 0907859
(43) Date of publication of application: 26.08.2020
(62) Divisional of application: 10718493.9
(73) Proprietor: SAIPEM S.p.A., 20138 Milano (IT)
(72) Inventor: NARDO, Marco, Milan (IT)
(74) Representative: Studio Torta S.p.A.

(56) References cited:
- US-A- 5 434 387
- US-A1- 2004 083 957

## Description

### Background of the Invention

The present invention concerns an apparatus and method for heating a heat-shrinkable sleeve on a pipe. More particularly, but not exclusively, this invention concerns a method of applying a heat-shrinkable sleeve to a portion of a pipe and a heat-delivery apparatus for heating a heat-shrinkable sleeve around a portion of a pipe.

Pipelines for transportation of hydrocarbons, such as gas or oil pipelines, typically comprise sections of pipe welded together. Each section of pipe may include one or more outer coatings including for example one or more of a corrosion resistant coating, a plastic coating, and a concrete coating. To allow the ends of two sections of pipe to be welded together, the pipe coating at each end includes a cut-back, exposing the metal pipe ends to be welded together. The exposed pipe-ends once welded together may be protected by means of arranging a heat-shrinkable sleeve over them and then attaching the sleeve to the exposed pipe ends in the welded region by heat-shrinking the sleeve onto the pipe.

A conventional method of heat-shrinking such heat-shrinkable sleeves is to apply heat manually with the use of propane torches. The use of such torches has disadvantages however. The torches are prone to heating the sleeve in an inhomogeneous way (i.e. in a non-uniform manner). Also, torch operators are required to operate the torches in the same environment as the welding process. The torches are manually moved over the sleeve surface. Manually heating the sleeve can be slow and adversely affect production speed.

US 5,073,108 and US 5,205,732 each describe a heat-delivery apparatus for heating a heat-shrinkable sleeve around a portion of a pipe. US 5,073,108 discloses a single ring of heater elements that are manually moved axially, back and forth, along the length of the pipe to pre-heat a pipe. A heat-shrinkable sleeve is then added to the pre-heated pipe and the ring of heater elements is moved along the length of the pipe to heat-shrink the sleeve onto the pipe. An operator is still required to manually move the apparatus along the sleeve to heat it. US 5,205,732 discloses a similarly arranged heat-delivery apparatus also requiring manual movement along the axis of the pipe in order to heat shrink the sleeve onto the pipe and, thus, suffers from similar disadvantages. US5434387 refers to a device and a method for shrinking heat recoverable sleeves for covering cable joints comprising a heating device the interior of which has a plurality of independently energizable heating elements and at least one sensor and a control circuit or control circuits which are connected to the heating elements and the at least one sensor. The control circuit in US5434387 is arranged to produce a uniform and then a non-uniform temperature profile within the heating device unless the initial temperature within the heating device is above a given temperature (e.g.) 30 DEG C in which case the control circuit waits until the temperature within the heating device falls to below the given temperature before producing the temperature profiles whereby sleeved cable joints of a uniform quality are produced by avoiding air entrapment within the sleeve during the shrinking process. US2004/083957 refers to a method and apparatus for coating a work piece, the system comprising an applicator adapted to travel over a portion of the work piece and being operable to heat the work piece and/or apply a coating onto the work piece as the applicator travels over the work piece. The system of US2004/083957 may comprise an induction heating system to heat the work piece.

The present invention seeks to mitigate the above-mentioned problems. Alternatively or additionally, the present invention seeks to provide an improved method of applying a heat-shrinkable sleeve to a portion of a pipe and/or an improved heat-delivery apparatus for heating a heat-shrinkable sleeve around a portion of a pipe.

### Summary of the Invention

The present invention provides a method of applying a heat-shrinkable sleeve to a portion of a pipe in accordance with claim 1 and a heat delivery apparatus in accordance with claim 9. Optional but preferred features are set out in the dependent claims.

Providing, first, second, and third heater devices along the length of the sleeve (along the axial direction) enables the heat-delivery apparatus to generate heat to different regions of the sleeve, in a controlled manner, without requiring axial movement of heater devices during the heating time period. The time needed to heat-shrink a sleeve onto the pipe may therefore be reduced. Individually controlling two or more of the heater devices when applying heat to the heat-shrinkable sleeve may allow better control of the heat-shrinking process, for example, ensuring even heating and/or causing progressive heating/shrinking along at least a part of the length of the sleeve.

Preferably, each of the first, second and third heater devices is individually controlled to apply heat to the heat-shrinkable sleeve. The method may include applying heat to the heat-shrinkable sleeve via the heat-delivery apparatus, such that the heat generated by the first heater device during a heating time period is less than the heat generated by the second heater device during the same time period. The heat generated by the first heater device during said heating time period may also be less than the heat generated by the third heater device during the same heating time period. The heat delivery apparatus may be so shaped that in use the extreme ends of the sleeve are at or near the end of the envelope of the apparatus. Thus, the second heater device located at one end of the sleeve may represent one end of the apparatus, whilst the third heater device located at the other end of the sleeve may represent the opposite end of the apparatus. In such a case, the ends of the sleeve may be in range of a smaller area of heater devices than, say, the middle of the sleeve. In such a case, in order to heat the sleeve evenly and to promote even shrinkage, it may be advantageous for the second and third heater devices to generate more heat during the shrinking of the sleeve than the first heater device.

The method of the invention may be performed in such a manner as to generate heat to the whole of the heat-shrinkable sleeve without moving the heat-delivery apparatus along the length of the sleeve. The method may for example include maintaining the heater devices in fixed position relative to the pipe during a heating time period (for example, a time period covering the time in which all heat required to shrink the sleeve is applied). Not requiring axial movement during heating of the sleeve may further increase the speed at which a sleeve may be shrunk onto the pipe. For example, there may be times at which a plurality of the heater devices are generating heat to the sleeve, such that the majority of, and possibly substantially all of, the external surface of the sleeve is heated at a given instant in time. The distance which the active heating parts of the heating devices span, along the length of the axis of the sleeve, may be greater than the length (i.e. the dimension along the length of the axis) of the sleeve. The length of the span of the heating devices may be slightly longer than the sleeve so as to ensure effective heat treatment of the sleeve at its lateral edges. Of course, arranging the apparatus such that the heating devices span a distance much longer than the length of the sleeve is unnecessary and possibly wasteful of space and energy. The method may include heat-shielding the pipe, or its coating if such coating is present, either side of the sleeve to protect those areas of the pipe from heating by the heater devices in the region of the ends of the sleeve.

Each heater device is in the form of an infrared heater. Each heater device may be in the form of an electric heater. The method preferably includes driving each heater device with electric power which is then converted into heat and/or electromagnetic radiation, such that the sleeve is heated. If radiation, for example infrared radiation, is generated then such radiation will typically transfer heat to the sleeve by means of the sleeve absorbing the radiation. Each heater device may be in the form of an electrically powered infrared heater.

The method may be performed such that the delivery of electric power to the heating devices to cause heating of the heat-shrinkable sleeve is completed within a heating time period. Thus, at the beginning of the heating time period the sleeve may be in a fully unshrunk state. At the end of the heating time period, the sleeve may be in a fully shrunk state.

It will be appreciated that the heater devices may still cause heating of the sleeve immediately after electric power to the heater device is switched off. Thus, the heaters may continue heating the sleeve at the very end of the heating time period, despite not being provided with electrical power at that time, as a result of such residual heating effects. It will also be appreciated that the heater devices may not start heating of the sleeve immediately after application of electric power to the heater device.

The method may include causing the first heater device to heat the sleeve during said heating time period at a first power level and causing the second heater device to heat the sleeve during said heating time period at a second power lower level, the second power level being higher, for example more than 500 higher, than the first power level. The first and second power levels may be measured by means of measuring the thermal power per unit area delivered to an area of 4cm² at a distance of 80mm away from the centre of the heating element of the heater device. Areas of the sleeve may for example be preheated at a lower power level whilst other areas of the sleeve are being heated at a higher power level. This preheating may be followed by subsequently heating the same area of the sleeve at a higher power level. The preheating may be such that the sleeve does not shrink significantly, but does raise the temperature of the sleeve to just below the temperature at which shrinking occurs. Such a preheating step may allow progressive shrinking of the sleeve in a time-efficient manner.

In the case where the heater devices are caused to heat the sleeve by means of driving the devices with electric power, the method may include driving the first heater device during said heating time period at a first electric power level and driving the second heater device during said heating time period at a second electric power level, the second electric power level being higher than the first electric power level.

The peak power level of the second heater device during said heating time period may be higher than the peak power level of the first heater device. The average power level of the second heater device, when caused to heat the sleeve during said heating time period, may be higher than the average power level of the first heater device, when caused to heat the sleeve during said heating time period. The first heater device may have a lower power rating than the second heater device. Thus, the step of individually controlling the heater devices may consist of operating a heater device at a power different from the power at which a different heater device is operated.

During a heating time period, the time for which the first heater device is caused to heat the sleeve may be shorter than the time for which the second heater device is caused to heat the sleeve. For example, in the case where the heater devices are electric heaters, the method may include operating the heaters such that, during said heating time period, the time for which the first heater device is driven with electric power to generate heat is shorter than the time for which the second heater device is driven with electric power to generate heat. Thus, the step of individually controlling the heater devices may consist of operating a heater device to heat a portion of the sleeve over a time period different from the time period over which a different heater device is caused to heat a different portion of the sleeve.

The method may include causing, simultaneously for at least a part of a heating time period, each of at least three of the heater devices, to heat the sleeve. For example, in the case where the heater devices are electrically powered, the method may include driving, simultaneously for at least a part of said heating time period, each heater device with electric power to cause heating of the sleeve. In the case where there are just three heater devices, then all three may be operated simultaneously. It may be the case that only some, and not all, of the heater devices are caused to heat the sleeve for at least a part of a heating time period. The method may for example include, during said heating time period, causing heating of the heat-shrinkable sleeve via at least three of the heater devices, whilst at least one other heater device is not heating the sleeve, and after a time delay causing heating of the sleeve via said at least one other heater device. For example, it may be beneficial to cause sequential or progressive shrinking of the sleeve to avoid trapping air within the sleeve as it shrinks. The heating may for example be initially centred on the centre of the sleeve, with heating of parts of the sleeve closer to either end of the sleeve commencing later. The heating of the sleeve could be conducted by heating one end first and then heating successive regions of the sleeve towards the opposite end of the sleeve in the axial direction. It is preferred that at least one heater device is heating the sleeve at any time during substantially the entire heating time period. Adjacent heater devices may, at certain times, be operated simultaneously. The method may be performed such that all heater devices of the apparatus arranged to heat the sleeve are operated simultaneously to effect heating of the entire sleeve.

Preferably there are between four and twenty, inclusive, heater devices arranged at different positions along the axis. There may be between five and ten, inclusive, heater devices. In such a case, there will be one or more heater devices positioned between the first and second heater devices. Each heater device may, in its heating configuration extend circumferentially about the axis of the pipe/apparatus, for example, thus forming a ring-like structure.

During the heating time period, the method includes a step of sensing the temperature of the sleeve or in the region of the sleeve. Such a measurement may then be used to control the driving of at least one of the heater devices. For example, the heater devices may be arranged to cause heating of the sleeve up until the sleeve, or a region near the sleeve, reaches a predetermined temperature. The predetermined temperature is preferably less than 300 degrees Celsius. The heater devices may be controlled to maintain a predetermined temperature profile over time. The method may include providing a control unit which controls the heating of the sleeve in dependence on the temperature so sensed. One or more temperature sensors may detect the temperature and send a signal representative of the temperature measurement to the control unit. The control unit may operate by means of a feedback mechanism, whereby the heating of the sleeve caused by one or more heater devices is controlled in dependence on the temperature sensed. The method is preferably performed such that the sleeve is shrunk onto the pipe without causing the temperature of the sleeve to increase above 300 degrees Celsius.

The method may comprise applying more heat to the sleeve at a first circumferential position compared to a second circumferential position along at least the majority of the length of, and preferably the entire length of, the sleeve. The first circumferential position may correspond to the circumferential position of the seam of the sleeve. The seam of the sleeve typically comprises a region of overlap of the material forming the sleeve (and therefore a thicker region of sleeve) which may require greater heating to cause shrinkage. This may be achieved by using an array of independently controllable heater elements.

The method may be performed as part of a method of laying a pipeline. The pipe onto which the sleeve is heat-shrunk may therefore be defined by part of a pipeline, for example the end of a pipeline. The method may be performed from a vessel and the pipeline may be laid at sea. The pipeline may alternatively be a cross-country pipeline. The method may include an initial step of forming the pipe by welding two pipe sections together. One of the pipe-sections may be defined by the end of a pipeline. The other of the pipe-sections may be defined by a new length of pipe to be added to the end of the pipeline. The new length of pipe may have a length of greater than 5m, and may possibly be longer than 10m. The pipe may be in the form of a metal pipe, for example a steel pipe, having a non-metallic coating and a cut-back region, onto which the sleeve is shrunk. The diameter of the pipe, for example in an uncoated region, may be more than about 150mm, and possibly greater than 400mm. The non-metallic coating may be in the form of a corrosion-resistant coating that protects the metal pipe from corrosion. The pipe may additionally comprise a further non-metallic coating, being at least 50% denser than water, such as for example a concrete coating.

The heat-shrinkable sleeve may be made from an extruded cross-linked polyolefin sheet, for example polyethylene or polypropylene. The sleeve may include an applied adhesive. The adhesive may be different for different types of pipeline operating conditions. The method may include applying an epoxy primer on either the sleeve or on the pipe surface. The sleeve may have a length (along the axis of the sleeve/pipe) of greater than 100mm, and possibly greater than 400mm. The sleeve may be shorter than 1,000mm.

In an alternative aspect of the disclosure described below, the first, second and third heater devices are all used simultaneously to heat the sleeve. There is, in relation to this alternative embodiment, no need to provide individual power control to each of the first, second and third heater devices. There are however advantages of providing a heat-delivery apparatus configurable to deliver heat to all regions of the sleeve without requiring movement of any part of the heat-delivery apparatus to heat different regions of the sleeve. In accordance with a second aspect there is provided a method of applying a heat-shrinkable sleeve to a portion of a pipe, the method including the following steps:
- providing a pipe,
- arranging a heat-shrinkable sleeve around a portion of the pipe,
- arranging a heat-delivery apparatus around the pipe in the region of the sleeve in a heating configuration, and then
- applying heat to all regions of the heat-shrinkable sleeve via the heat-delivery apparatus, without moving any part of the heat-delivery apparatus relative to the pipe to heat different regions of the sleeve.

The heat-delivery apparatus includes at least three heater devices arranged to heat different regions of the sleeve. The heater devices are preferably configured to be modular and readily replaceable. Each heater device may be individually controllable in accordance with the first aspect of the invention. Other features described with reference to the first aspect of the invention may be incorporated into this second aspect, and *vice versa.* Also, whilst in the second aspect it is advantageous for no part of the heat-delivery apparatus to be moved relative to the pipe for the purpose of heating different regions of the sleeve during the heating process, in other embodiments of the invention it may be desirable to enable movement of at least one heater device of the heat-delivery apparatus during the sleeve-heating step.

In accordance with a third aspect, there is provided a heat-delivery apparatus for heating a heat-shrinkable sleeve around a portion of a pipe during a method of laying a pipeline, wherein the heat-delivery apparatus includes at least three heater devices so arranged that, in use, the first heater device is positioned between second and third heater devices in the direction of the axis of the sleeve. The heat-delivery apparatus may be configured to perform the method of the present invention. The heat-delivery apparatus may have an axis that, in use, is arranged to coincide with the longitudinal axis of the portion of the pipe. Each of the first, second and third heater devices are preferably so arranged that, in use, each heater device includes heating elements arranged circumferentially and symmetrically around the axis of apparatus. The apparatus may include a frame arranged to support each of the first, second and third heater devices. The frame may for example support the first, second and third heater devices in position relative to the axis of the apparatus.

The axis of the apparatus is, for the avoidance of doubt, in the form of a straight line. The axis is a notional line, and may simply be defined by the notional line which coincides with the centre of each set of circumferentially arranged heater elements which define each heater device (when in the operational / heating configuration). Parts of a long pipeline may include significant curvature such that the axis of the pipeline may not be readily defined by a straight line. It will however be understood that in the context of the present invention the curvature, if any, in the region of the portion of the pipe around which the heat-shrinkable sleeve is arranged, will be normally be negligible, such that a straight line axis is readily defined.

The apparatus includes a control unit for controlling the operation of the one or more heater devices. Said at least three heater devices are arranged to be powered electrically under the control of the control unit. If the heater device includes heating elements arranged circumferentially and symmetrically around the axis of the apparatus, each heating element may be individually controllable by the control unit.

The heating elements of each of said at least three heater devices are in the form of infrared heaters. The heating elements of each of said at least three heater devices are in the form of panel heaters. Each panel has a flat heating face. The flat faces of the heater panels may be arranged circumferentially and symmetrically around the axis of apparatus to form the general shape of a regular polygon. Each panel may for example define one side of the polygon. Alternatively, each side of the polygon may be defined by a plurality of panels. The apparatus may include a heater-mounting structure associated with each heater element. Each heater element may include a power connector connected to a corresponding power connector of the heater-mounting structure. Each heating element may be removably mounted on the heater-mounting structure. Thus, a defective heating element may be quickly and easily replaced. The means providing the electrical connection between the heating element and the heater-mounting structure may assist in providing the mounting of the heating element on the heater-mounting structure.

The heat-delivery apparatus is preferably arranged for movement between an open position and a closed position, such that in the open position, the heat-delivery apparatus defines a pipe entry region to allow passage of a pipe into or out of the heat-delivery apparatus. The heat-delivery apparatus in its closed position may be arranged such that the heating elements of the heater devices are arranged in positions, for example circumferentially and symmetrically around the axis of apparatus, ready to generate heat evenly to a pipe located in the apparatus, the pipe entry region being closed. Each heater device may have at least two portions connected to each other by a hinge mechanism that allows rotation of one portion of the device relative to another portion of the device about an axis of rotation that is parallel to the axis of the apparatus. Arranging the heater devices in such a manner may enable movement of the heat-delivery apparatus between its open and closed positions. A single hinge mechanism may be shared by two or more of the heater devices. Each heater device may be moved between open and closed positions by means of two or more hinge joints. The heat-delivery apparatus may be so arranged that the movement between its open and closed positions is performed by means of a clamping movement. It will be understood that the heat-delivery apparatus need not physically clamp the pipe during use, but that the movement of the heat-delivery apparatus may be similar to that of a clamp.

The heat-delivery apparatus may be mounted for movement towards and away from a pipe, for example by means of movement in a direction substantially along a radius of the pipe. The apparatus may be configured to move towards the pipe in an open position, and then, when the apparatus has accommodated the pipe, to close around the pipe. The heat-delivery apparatus may further include a centring mechanism to facilitate, in use, alignment of the axis of the apparatus with the axis of a longitudinal axis of the portion of the pipe. The heat-delivery apparatus may be so configured as to maintain, in use, the heating elements of the heater device in spaced-apart relation with the heat-shrinkable sleeve around a pipe. For example, the distance between the exterior of the (uncoated) pipe at its narrowest diameter and the nearest point on an active heating part of a heating element may be between 20mm and 300mm. The distance may be between 50mm and 150mm. The centring mechanism may include legs, for example including feeler elements or pads, that contact the pipe to allow the apparatus to centre correctly on the pipe. The centring mechanism may additionally, or alternatively, include a light emitter for illuminating a part of the pipe. Two or more light emitters may each illuminate a point on the pipe, such that inspection of the points illuminated assist in the alignment of the apparatus relative to the pipe. In such a case, the centring mechanism may additionally include a light sensor for detecting light from the light emitter reflected by the pipe.

It will of course be appreciated that features described in relation to one aspect of the present invention may be incorporated into other aspects of the present invention. For example, the method of the invention may incorporate any of the features described with reference to the apparatus of the invention and *vice versa.* Thus, the heat-delivery apparatus may be arranged and configured to perform the method of the invention. For example, the apparatus is configured to sense the temperature of the sleeve by means of temperature sensors, then use the temperature so sensed via a control unit, to control the driving of at least one of the heater devices. The method may similarly include use of the heat-delivery apparatus according to the invention.

### Description of the Drawings

Embodiments of the present invention will now be described by way of example only with reference to the accompanying drawings of which:
- Figure 1: is a schematic cross-sectional view of a joint in a pipeline showing a field joint coating and cut-back region;
- Figures 2 and 3: are perspective views of a heat delivery apparatus according to a first embodiment of the invention, the apparatus including a frame structure;
- Figure 4: is a partial view of the apparatus of Figures 2 and 3, with the frame structure removed for the sake of clarity;

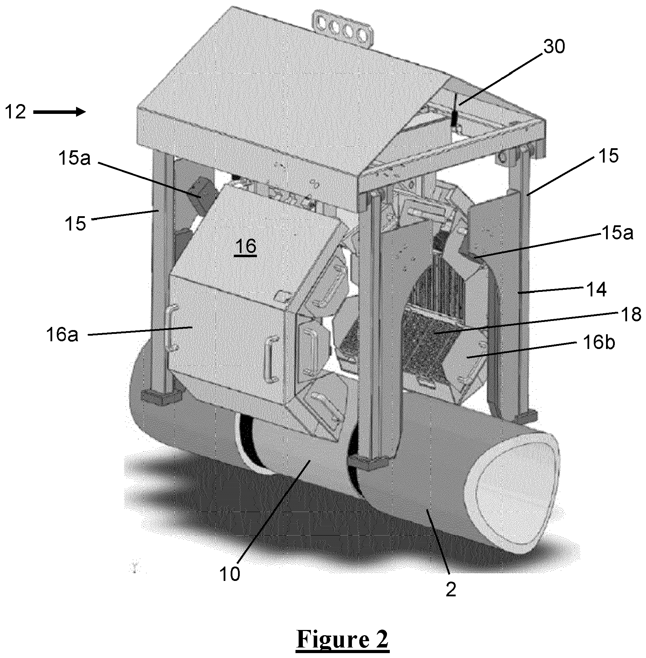

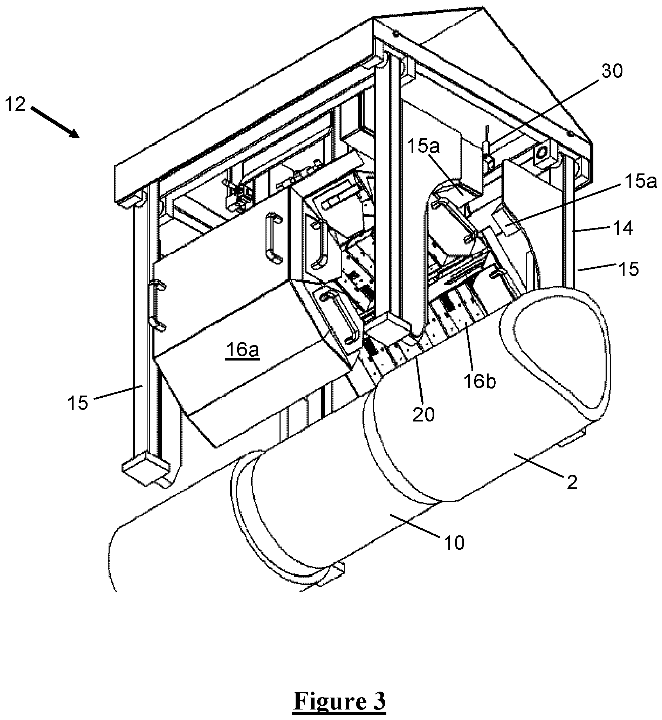

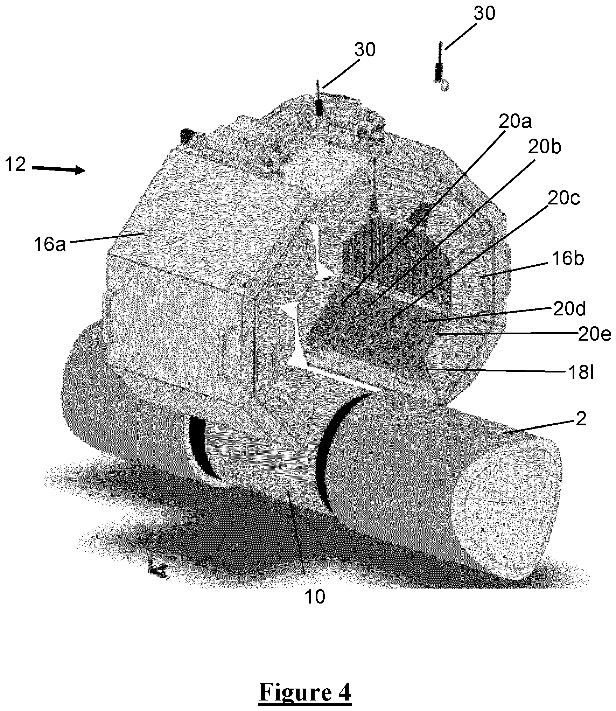

- Figure 4: is a cross-section of an upper part of the apparatus of Figures 2 and 3;

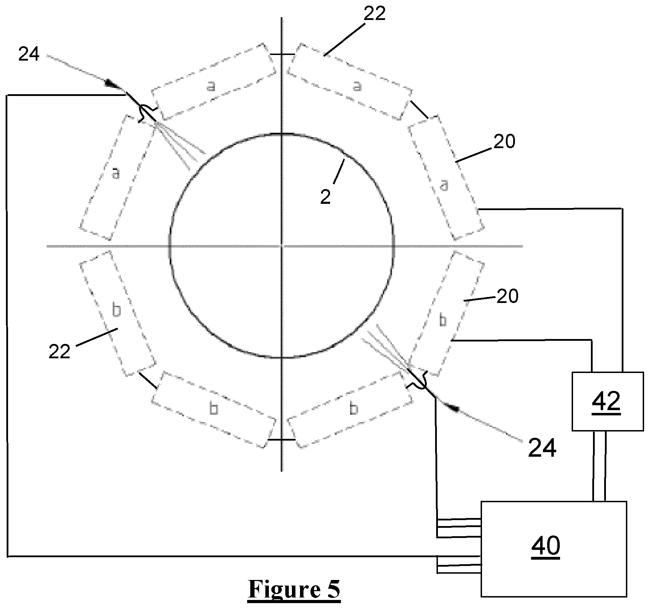

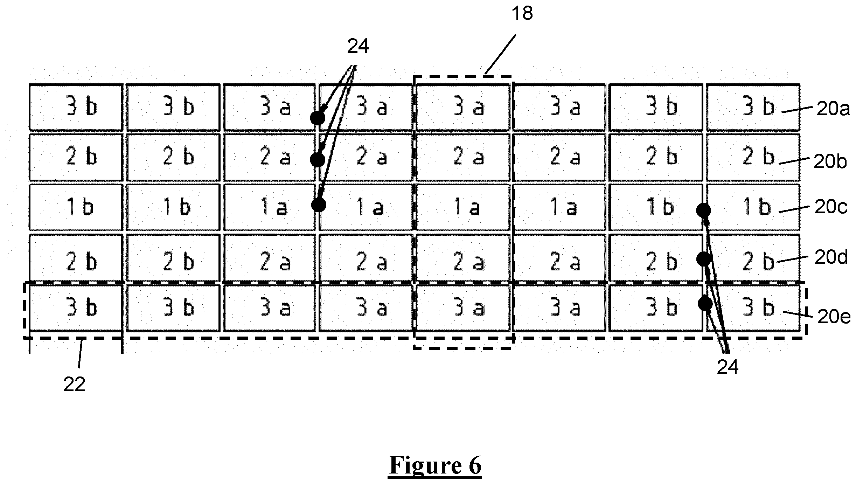

- Figures 5 and 6: are schematic views showing the layout of heater elements and pyrometers of the apparatus of Figures 2 and 3;

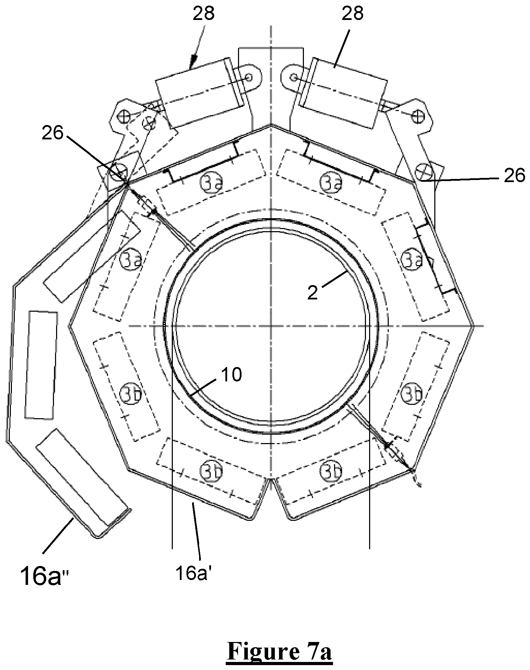

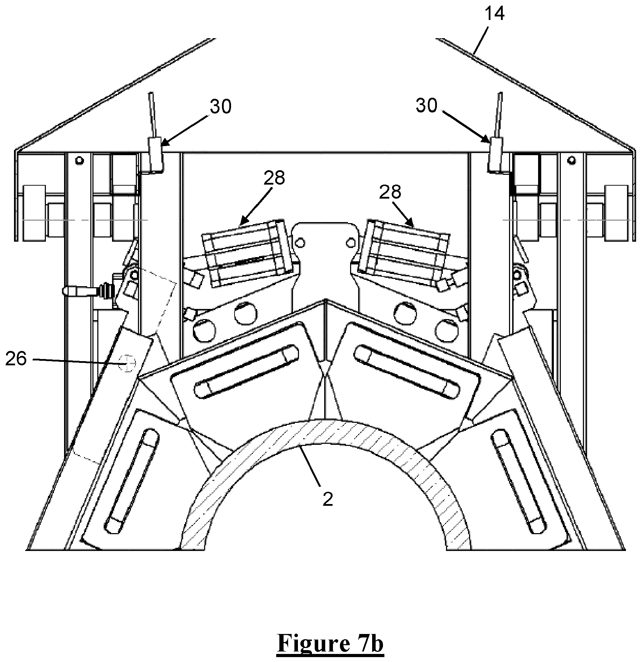

- Figures 7a and 7b: are schematic cross-sectional views of the apparatus of Figures 2 and 3, with Fig 7a showing parts of the apparatus in both an open configuration and a closed configuration as a composite view; and

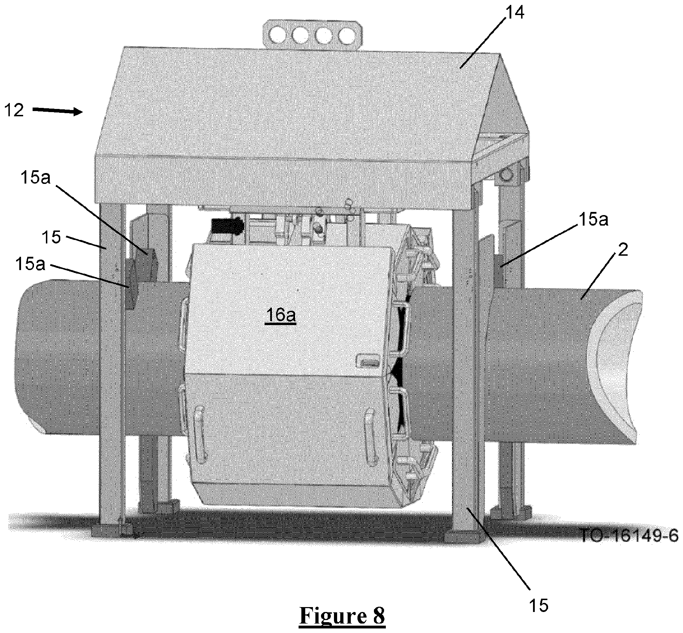

- Figure 8: shows the apparatus of Figures 2 and 3 heating a heat-shrinkable sleeve on a pipeline.

### Detailed Description

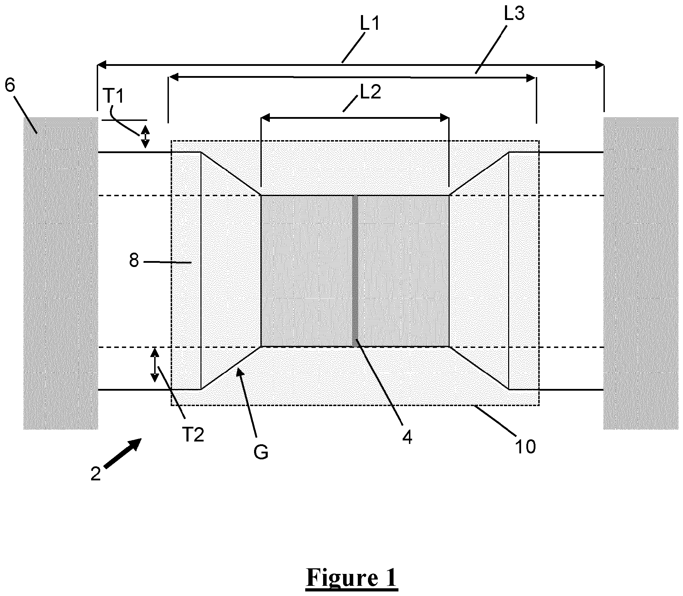

Figure 1 shows in cross-section a schematic view of a coated pipeline 2 in the region of a welded joint 4. The pipeline is coated with concrete 6 along its length, but in the region of the joint 4 there is a cut-away portion of a length L1 of about 750mm where the concrete is absent. The concrete coating 6 has a thickness T1 of about 40mm. The pipe, being of steel, has a corrosion resistant plastic coating 8 having a thickness T2 of about 2.5mm. This coating 8 is also cut away to reveal a bare field joint having a length L2 of about 350mm, in which the uncoated steel pipe is exposed. The external diameter of the uncoated (bare) pipe is about 450mm. The length of the pipe section being added to the pipeline is about 12m (40 feet). The plastic pipe coating 8 gradually reduces in thickness from 2.5mm to 0mm by means of a gradient G of about 15 to 20 degrees (the scale in Figure 1 is exaggerated for the sake of illustrating the geometry of the component parts of the pipe in the region of the joint 4). The plastic coating 8 and concrete coating 6 need to be absent in the region of the field joint so that the pipe ends can be welded together at the weld joint 4.

In order to protect the pipe 2 after the weld has been produced, a heat shrinkable sleeve (not shown in Fig. 1) is applied and shrunk onto the bare pipe so that the bare steel is covered either by the heat shrinkable sleeve or the plastic pipe coating 8. The region encompassed by the heat shrinkable sleeve, which typically has a length, L3, of about 550mm, is designated in Fig. 1 by the shaded area 10. The sleeve may have a mean diameter, in its unshrunk state, of about 10mm - 15mm greater than the pipe diameter.

The first embodiment of the invention concerns a method and apparatus for heating a heat shrinkable sleeve onto a field joint by means of a heat delivery apparatus of the type shown in Figures 2, 3 and 4. Figures 2 and 3 show the heat delivery apparatus 12 in an open configuration in which the apparatus may be moved into position around a pipe 2. The apparatus 12 includes a frame 14 (shown in Figs. 2 and 3, but omitted from Fig. 4 for the sake of clarity) and two semi-toroidal heater arrays 16a, 16b. The frame includes four legs 15, which in certain applications may be lowered so that the feet of the legs 15 rest on a surface (such as the floor/work platform/ground). The frame 14 acts to support the arrays 16 of heaters in position relative to each other. Each array 16 of heaters includes four flat panels 18, each panel 18 comprising five independently controlled heating elements 20 (controlled by a control unit described later). Thus, as shown in Figure 4 the lower most heating panel 181 of the right hand array 16b includes five rectangular heating elements 20a to 20e arranged sequentially along the axis of the apparatus 12 (the axis of the apparatus 12 in Figure 4 being parallel to but spaced apart from the axis of the pipe 2).

The heater elements 20 are arranged such that an individual heater element 20 may be readily replaced. This is achieved by ensuring that interface between each heater element 20 and the structure of the heater array 16 includes a plug and socket arrangement that both provides a physical mounting for holding the heater element in place and also an electrical connection between the heater element 20 and the control unit (described later) of the apparatus. Each heater element 20 is defined by an infra-red heater panel of a type available from Krelus AG of Hirschthal, Switzerland.

In use, the heater arrays 16a, 16b are closed around the pipe 2 to form a toroidal shape, so that a tunnel of heater elements 20 is formed. When in the closed position the heater arrays 16 effectively comprises forty heater elements 20, disposed in five octagonal rings arranged along the length of, and concentric with, the pipe 2. It will be seen that each of the heater panels 18 has a substantially flat heating surface.

The apparatus is provided with handles to ease with manual handling of the apparatus if such is required.

Figures 5 and 6 illustrate schematically the arrangement of the heater elements 20 around the pipe 2 when the apparatus is in its closed, heating, position. Figure 5 shows in cross section the pipe 2 and a single ring 22 of heater elements 20. The elements 20 in the upper half are labelled with the letter *"a"* whereas the heater elements 20 in the bottom half are labelled with the letter "*b*". Figure 6 illustrates schematically the relative position of the forty heater elements 20 (showing their position if the geometry were unrolled onto a flat plane). Thus, there are shown five rings 22 each of eight heater elements 20. Each heater panel 18 is represented in Figure 6 as a column, whereas each ring 22 is represented as a row. It will be appreciated that when the apparatus is used to heat a sleeve, the heater elements 20 represented by the right-hand end column of the table of elements 20 shown in Fig. 6 are directly adjacent to the heater elements represented by the left-hand end column.

The rings 22 of heater elements are independently controlled, according to the zone in which the ring 22 is positioned. (Each ring may effectively be considered as an independent heating device.) There are three types of zone, namely a central zone (indicated in Figure 6 by use of the number "*1*"), two intermediate zones (indicated in Figure 6 by use of the number *"2",* and two outer zones (indicated in Figure 6 by use of the number *"3"*)*.* Thus, the heater element indicated by reference numeral 20a in Figure 6 has the number-letter code *"3b",* indicating that the element 20a is in an outer zone and positioned in the lower half of the ring. Figures 5 and 6 also show the position of six pyrometers 24, which are used to measure the temperature of the sleeve when the apparatus is heating the sleeve.

Figure 5 also includes a highly schematic illustration of the control unit 40 of the apparatus 12. The control unit 40 is connected to the pyrometers 24, to receive temperature measurements from the pyrometers 24. The control unit 40 is also connected to each of the heating elements that form the heating arrays 16, via a suitable power interface 42.

Figure 7a shows a cross-section of the apparatus illustrating how the apparatus engages with, and disengages from, a pipe. Figure 7b shows a cross-section of the upper part of the apparatus, and in contrast to Fig. 7a, also shows a part of the frame 14 of the apparatus. As shown in the cross-sectional views of Figure 7a and 7b, each array 16 of heaters includes a hinge mechanism 26, which allows each array 16 to be moved from an open position as shown for example in Figure 2, and a closed position as shown for example in Figure 8. Figure 7a is a composite view showing the left hand array 16a of heaters both in the open position (reference numeral 16a") and in the closed position (represented by the reference numeral 16a'). Pneumatic cylinders 28 are provided to actuate the hinge mechanisms 26, thereby effecting movement of the apparatus between the open and closed positions.

The heater arrays 16 are also mounted for movement towards and away from the pipe, in the vertical direction in the orientation shown in Figures 7a and 7b (i.e. along a radial direction, with reference to the pipe). The frame 14 moves with the heater arrays 16 when the apparatus 12 moves towards and away from the pipe.

The apparatus 12 includes a centring mechanism that assists alignment of the apparatus 12 with a pipe 2. With reference to Figs. 3 and 4, the frame 14 includes laser pointers 30, with associated light sensors (not shown), for ensuring that the heater arrays 16 are correctly aligned with, and concentric with, the pipe 2 (at least to within a tolerance of say +/- 10mm). The four laser pointers (two positioned at the front of the frame and two at the back) each illuminate a point on the pipe, the 3-dimensional position of which, relative to the frame, being sensed by a light sensor array. The orientation of the frame 14, and therefore the heater arrays 16, relative to the pipe may therefore be calculated and automatically corrected. The apparatus 12 is arranged for movement in the x, y, and z directions and about the x, y, and z axes. As perhaps best seen from Fig. 3, the centring mechanism frame also includes centring pads 15a, mounted on the legs 15, to assist in the centring of the apparatus 12 in relation to the pipe 2.

Heat shrinking of a sleeve onto a field joint of a pipe according to a method of the first embodiment of the invention will now be described with reference to the accompanying Figures.

First, with reference to Figure 1, a weld 4 is formed between one end of a pipeline and a new section of pipe. Next a FBE (Fusion Bonded Epoxy) primer is applied to the bare pipe. Then the sleeve 10, including an intermediate adhesive back coating (of a hard semi-crystalline hot melt adhesive), is assembled over the pipe 2 and the weld joint 4. The sleeve 10 is initially in the form of a rectangular double-layer (the sheet plus a layer of adhesive) piece of material, which is wrapped around the pipe so that two opposite ends of the material meet. The two ends are welded together in a known manner by means of a sleeve welder to form the tubular sleeve 10.

The heat delivery apparatus 12 is then moved towards the axis of the pipe with the heater arrays 16a, 16b in their open configuration (see Figures 2, 3, and 4). The centring pads 15a and the laser guides 30 are used to correctly align the apparatus 12 with the pipe 2. The heater arrays 16 are then moved from the open position to the closed position, such that the heater elements 20 are arranged concentrically around, and in symmetrical alignment, with the pipe (as shown in Figure 8). Thus, the heater arrays 16 form five octagonal rings of eight heater elements 20 around the pipe. The distance between the pipe exterior and the closest part of the heater elements is about 100mm.

The heater elements 20 are then operated in such a way that infra-red radiation is delivered to the heat shrinkable sleeve initially from the centre of the sleeve and then after a time delay towards its periphery. The power of radiation delivered by the heater elements is also graduated so that the central zone is heated with less power, because it has heating of the sleeve contributed by heater elements associated with the lateral zones (i.e. to promote even heating, less power is provided to the heater elements in the central zone). Thus, the heater elements are arranged such that those in zone 1 (the central zone) deliver power in the range of 0 to 4kw, whereas those in zones 2 and 3 deliver between 0 and 8kw. The heater elements in each zone are operated for about 100 seconds. Power is first delivered to those heater elements in zone 2 after the elements of zone 1 have been powered for more than half their allotted time, but before power delivery to the elements in zone 1 is stopped. Thus, after about 80 seconds, electric power is delivered to the infra-red heater elements in zones 2, the power being delivered to the elements in zones 2 for a total time of about 100 seconds. Similarly, the start of delivery of electric power to the heater elements in zones 3, at the periphery of the sleeve, is commenced after about 80 seconds from the start of delivery of power to the heater elements in zone 2, that is about 160 seconds after the start of the heating process. Thus, the time at which electric power delivery to the heater elements in zone 3 is stopped is about 260 seconds from the start of the process, that is between about 4 and 5 minutes. The exact length of time of heating, and the power at which heat delivered, is controlled by the control unit 40 in dependence on the temperature of regions of the sleeve 10 as sensed by the pyrometers 24 provided for that purpose. The feedback control employed in the first embodiment is simply to ensure that the temperature of the sleeve does not increase above a threshold level at which there is a danger of overheating. In this embodiment the threshold is set at 220 degrees Celsius (maximum desired temperature of the sleeve). Thus, the heater elements may be controlled by the control unit 40 and/or shut down to reduce the temperature in such regions, if the pyrometers 24 detect overheating. Effectively, the pyrometers 24 ensure that an optimum heating temperature is reached and then portions of the sleeve are sequentially maintained at that temperature for a chosen length of time, without overheating. The distance between the infra-red heaters and the sleeve is kept relatively low to ensure good heating characteristics and good heating efficiency.

The heater elements in zones 2 and 3 each deliver heat at a power roughly double that of the heater elements in the central zone, zone 1. The time at which such heat is delivered is however approximately the same, being about 100 seconds per heater element. Thus, the heat generated by a heater element during the heating process for heat-shrinking a single sleeve in zone 1 (the central zone) is about half that of the heat generated by a heater element during the same time period at the periphery of the sleeve, i.e. any of the heater elements in zone 3.

The sleeve is then allowed to cool, whilst the apparatus 12 is opened and subsequently retracted.

Referring to Figure 6, each of the heater elements (for example, 20a, b, c, d, e) is individually controllable. For example, greater heating power may be provided to heater elements at the same circumferential position (compared to heater elements in other circumferential positions) along the entire length of the sleeve. In order to achieve this, more power may be applied to heater elements 20a, b, c, d, e than to other heater elements. This may be of use in heating a seam region of the sleeve, since the sleeve is thicker in this region.

Greater power may be supplied to any one or more than one heater element. For example, greater power may be supplied to 20a, b, c, d or e alone. Likewise, referring to Figure 6, each of heating elements of ring 22 may be individually controlled. Greater power may be supplied to one or several of those heating elements in the ring 22.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The spatial distribution of, and timing of, the heating effected by the array of heating elements may be varied to suit particular circumstances. All heating elements in the array may, for example, be operated simultaneously for a length of time, possibly at different power outputs, so that the sleeve receives infra-red radiation over substantially its entire surface for the length of heating time, thereby leading to homogenous shrinkage. In such an embodiment, there may therefore be no need for individual control of the heating provided by separate portions/heating devices of the heating apparatus. Indeed, there may be no separately discernable heating devices arranged along the length of the axis. The individual heating elements need not individually be mounted in a plug and socket type arrangement, but may instead be hard wired in a collection of elements for each flat panel that extends along the entire length (along the sleeve axis) of the apparatus 12. Thus, five heating elements may be collected together as a removable unit, rather than having each of the heating elements removably mounted. Such an arrangement would simplify the structure of the apparatus, but would increase the cost of replacing a defective heating element. It will be appreciated that each of the five elements making up a panel may be arranged so as to be individually controlled. There may be individual control of each of the forty heating elements. Each of the forty heating elements may therefore be considered as an independent heating device. Alternatively, the heating elements in each of the five rings may be connected such that individual control of the power delivered to each ring of heating elements is controllable during use.

The apparatus may of course be used with pipes of smaller diameters. The apparatus may be scaled to be suitable for use with pipes of different diameters. The alignment of the apparatus relative to the pipe may be corrected manually. There would in such an arrangement be no need for the provision of light sensors of the like. Such manual movement of the apparatus may still however be guided by the points on the pipe illuminated by the laser light.

## Claims

1. A method of applying a heat-shrinkable sleeve (10) to a portion of a pipe (2), the method including the following steps:
- providing a pipe (2),
- arranging a heat-shrinkable sleeve (10) around a portion of the pipe (2),
- arranging a heat-delivery apparatus (12) around the pipe (2) in the region of the sleeve (10), the heat-delivery apparatus (12) including at least three heater devices (20) arranged at different positions along the axis of the pipe (2), such that
a first heater device (20c) is positioned closer to the centre of the sleeve (10), in the axial direction, than second (20a) and third (20e) heater devices,
the second heater device (20a) is positioned in the region of a first end of the sleeve (10), and
the third heater device (20e) is positioned in the region of a second end of the sleeve (10) opposite to the first end, and
- operating the first (20c), second (20a) and third heater (20e) devices to apply heat to the heat-shrinkable sleeve (10),
wherein during heat-shrinking of the sleeve (10), the method includes the step of sensing the temperature of the sleeve (10) or in the region of the sleeve (10) and then using the temperature so sensed to control the driving of at least one of the heater devices (20); and
**characterised in that** the heating elements of each of said at least three heater devices (20) are in the form of a plurality of infrared heaters, wherein each infrared heater is a panel with a flat heating face.

2. A method according to claim 1, wherein the method includes individually controlling each of the first, second and third heater devices to apply heat to the heat-shrinkable sleeve.

3. A method according to any preceding claim, wherein the method comprises providing a control unit which controls the heating of the sleeve in dependence on the sensed temperature of the sleeve.

4. A method according to claim 3, wherein the heat-delivery apparatus comprises a plurality of pyrometers and the exact length of time of heating, and the power at which heat is delivered, is controlled by the control unit in dependence on the temperature of regions of the sleeve as sensed by the pyrometers provided for that purpose.

5. A method according to any preceding claim, wherein the heater devices are controlled to cause heating of the sleeve up until the sleeve or a region near the sleeve reaches a predetermined temperature and then to maintain a predetermined temperature profile over time.

6. A method according to any preceding claim, comprising applying more heat to the sleeve at a first circumferential position compared to a second circumferential position along at least the majority of the length of the sleeve.

7. A method according to any preceding claim, wherein the each heater device includes heating elements arranged circumferentially around the axis of the apparatus when the heat-delivery apparatus is arranged around the pipe.

8. A method according to any preceding claim, wherein the method is performed in such a manner as to generate heat to the whole of the heat-shrinkable sleeve without moving the heat-delivery apparatus along the length of the sleeve.

9. A heat-delivery apparatus (12) for heating a heat-shrinkable sleeve (10) around a portion of a pipe (2) during a method of laying a pipeline, wherein
the heat-delivery apparatus (12), in use, has an axis alignable to coincide with the longitudinal axis of the portion of the pipe (2), and
the heat-delivery apparatus (12) includes at least three heater devices (20) so arranged that, in use, the first heater device (20c) is positioned between second (20a) and third heater (20e) devices in the direction of the axis of the apparatus,
each of the first (20c), second (20a) and third (20e) heater devices are so arranged that, in use, the heater device includes heating elements arranged circumferentially and symmetrically around the axis of apparatus,
the heat-delivery apparatus (12) includes a control unit for controlling the operation of said at least three heater devices, said at least three heater devices (20) being arranged to be powered electrically under the control of the control unit; and
wherein
the heat-delivery apparatus (12) comprises one or more temperature sensors (24) configured to sense the temperature of the sleeve (10) or in the region of the sleeve (10); and
the control unit is configured to control the heating of the sleeve (10) in dependence on the temperature so sensed,
and **characterised in that** the heating elements of each of said at least three heater devices (20) are in the form of a plurality of infrared heaters, for example wherein each infrared heater is a panel with a flat heating face.

10. A heat-delivery apparatus according to claim 9, wherein each heating element is individually controllable by the control unit.

11. A heat-delivery apparatus according to any one of claims 9 or 10, further including
a panel-mounting structure associated with each infrared heater panel, wherein
each panel includes a power connector connected to a corresponding power connector of the panel-mounting structure, and
each panel is removably mounted on the panel-mounting structure.

12. A heat-delivery apparatus according to any of claims 9 to 11, wherein the heat-delivery apparatus is arranged and configured to perform the method of any of claims 1 to 8.

13. A method according to any of claim 1 to 8, wherein the step of arranging a heat-delivery apparatus around the pipe in the region of the sleeve is performed by arranging a heat-delivery apparatus according to any of claims 9 to 11 around the pipe.

## Patentansprüche

1. Verfahren zum Anbringen einer wärmeschrumpfbaren Hülse (10) an einem Abschnitt eines Rohrs (2), wobei das Verfahren die folgenden Schritte umfasst:
- Vorsehen eines Rohrs (2),
- Anordnen einer wärmeschrumpfbaren Hülse (10) um einen Abschnitt des Rohrs (2),
- Anordnen einer Wärmezufuhreinrichtung (12) in dem Bereich der Hülse (10) um das Rohr (2), wobei die Wärmezufuhreinrichtung (12) mindestens drei Heizvorrichtungen (20) umfasst, die so an unterschiedlichen Positionen entlang der Achse des Rohrs (2) angeordnet sind, dass
eine erste Heizvorrichtung (20c) näher an der Mitte der Hülse (10), in der axialen Richtung, positioniert ist als eine zweite (20a) und eine dritte (20e) Heizvorrichtung,
die zweite Heizvorrichtung (20a) in dem Bereich eines ersten Endes der Hülse (10) positioniert ist, und
die dritte Heizvorrichtung (20e) in dem Bereich eines zweiten Endes der Hülse (10), das dem ersten Ende gegenüberliegt, positioniert ist, und
- Betreiben der ersten (20c), der zweiten (20a) und der dritten (20e) Heizvorrichtung, um Wärme auf die wärmeschrumpfbare Hülse (10) anzuwenden,
wobei das Verfahren, während des Wärmeschrumpfens der Hülse (10), den Schritt des Erfassens der Temperatur der Hülse (10) oder in dem Bereich der Hülse (10) und anschließenden Verwendens der so erfassten Temperatur zum Steuern des Antriebs mindestens einer der Heizvorrichtungen (20) umfasst; und
**dadurch gekennzeichnet, dass** die Heizelemente von jeder der mindestens drei Heizvorrichtungen (20) in der Form einer Vielzahl von Infrarotstrahlern vorliegen, wobei jeder Infrarotstrahler ein Paneel mit einer flachen Heizfläche ist.

2. Verfahren nach Anspruch 1, wobei das Verfahren ein individuelles Steuern jeder von der ersten, der zweiten und der dritten Heizvorrichtung umfasst, um Wärme auf die wärmeschrumpfbare Hülse anzuwenden.

3. Verfahren nach einem beliebigen vorhergehenden Anspruch, wobei das Verfahren ein Vorsehen einer Steuereinheit umfasst, die die Erwärmung der Hülse in Abhängigkeit von der erfassten Temperatur der Hülse steuert.

4. Verfahren nach Anspruch 3, wobei die Wärmezufuhreinrichtung eine Vielzahl von Pyrometern umfasst und die genaue Zeitdauer der Erwärmung sowie die Leistung, mit der Wärme zugeführt wird, von der Steuereinheit in Abhängigkeit von der Temperatur von Bereichen der Hülse, wie von den für diesen Zweck vorgesehenen Pyrometern erfasst, gesteuert wird.

5. Verfahren nach einem beliebigen vorhergehenden Anspruch, wobei die Heizvorrichtungen so gesteuert werden, dass sie eine Erwärmung der Hülse bewirken, bis die Hülse oder ein Bereich in der Nähe der Hülse eine vorbestimmte Temperatur erreicht, und anschließend ein vorbestimmtes Temperaturprofil im Verlauf der Zeit aufrechterhalten.

6. Verfahren nach einem beliebigen vorhergehenden Anspruch, das ein Anwenden von mehr Wärme in einer ersten Umfangsposition als in einer zweiten Umfangsposition auf die Hülse zumindest entlang des Großteils der Länge der Hülse umfasst.

7. Verfahren nach einem beliebigen vorhergehenden Anspruch, wobei jede Heizvorrichtung Heizelemente umfasst, die in Umfangsrichtung um die Achse der Einrichtung angeordnet sind, wenn die Wärmezufuhreinrichtung um das Rohr angeordnet ist.

8. Verfahren nach einem beliebigen vorhergehenden Anspruch, wobei das Verfahren derart ausgeführt wird, dass Wärme an der gesamten wärmeschrumpfbaren Hülse erzeugt wird, ohne die Wärmezufuhreinrichtung entlang der Länge der Hülse zu bewegen.

9. Wärmezufuhreinrichtung (12) zur Erwärmung einer wärmeschrumpfbaren Hülse (10) um einen Abschnitt eines Rohrs (2) während eines Verfahrens zum Verlegen einer Rohrleitung, wobei
die Wärmezufuhreinrichtung (12), in Verwendung, eine Achse aufweist, die so ausgerichtet werden kann, dass sie mit der Längsachse des Abschnitts des Rohrs (2) zusammenfällt, und
die Wärmezufuhreinrichtung (12) mindestens drei Heizvorrichtungen (20) umfasst, die so angeordnet sind, dass, in Verwendung, die erste Heizvorrichtung (20c) zwischen der zweiten (20a) und der dritten (20e) Heizvorrichtung in der Richtung der Achse der Einrichtung positioniert ist,
jede von der ersten (20c), der zweiten (20a) und der dritten (20e) Heizvorrichtung so angeordnet ist, dass die Heizvorrichtung, in Verwendung, Heizelemente umfasst, die in Umfangsrichtung und symmetrisch um die Achse der Einrichtung angeordnet sind,
die Wärmezufuhreinrichtung (12) eine Steuereinheit zum Steuern des Betriebs der mindestens drei Heizvorrichtungen umfasst, wobei die mindestens drei Heizvorrichtungen (20) so ausgelegt sind, dass sie unter der Steuerung der Steuereinheit elektrisch betrieben werden; und wobei
die Wärmezufuhreinrichtung (12) einen oder mehrere Temperatursensoren (24) umfasst, die so ausgestaltet sind, dass sie die Temperatur der Hülse (10) oder in dem Bereich der Hülse (10) erfassen; und
die Steuereinheit so ausgestaltet ist, dass sie die Erwärmung der Hülse (10) in Abhängigkeit von der so erfassten Temperatur steuert,
und **dadurch gekennzeichnet, dass** die Heizelemente von jeder der mindestens drei Heizvorrichtungen (20) in der Form einer Vielzahl von Infrarotstrahlern vorliegen, wobei jeder Infrarotstrahler beispielsweise ein Paneel mit einer flachen Heizfläche ist.

10. Wärmezufuhreinrichtung nach Anspruch 9, wobei jedes Heizelement einzeln von der Steuereinheit gesteuert werden kann.

11. Wärmezufuhreinrichtung nach einem beliebigen der Ansprüche 9 oder 10, ferner umfassend
eine Paneelmontagestruktur in Verbindung mit jedem Infrarotstrahlerpaneel, wobei
jedes Paneel einen Stromanschluss umfasst, der mit einem entsprechenden Stromanschluss der Paneelmontagestruktur verbunden ist, und
jedes Paneel lösbar an der Paneelmontagestruktur montiert ist.

12. Wärmezufuhreinrichtung nach einem beliebigen der Ansprüche 9 bis 11, wobei die Wärmezufuhreinrichtung so ausgelegt und ausgestaltet ist, dass sie das Verfahren nach einem beliebigen der Ansprüche 1 bis 8 ausführt.

13. Verfahren nach einem beliebigen der Ansprüche 1 bis 8, wobei der Schritt des Anordnens einer Wärmezufuhreinrichtung in dem Bereich der Hülse um das Rohr durch Anordnen einer Wärmezufuhreinrichtung nach einem beliebigen der Ansprüche 9 bis 11 um das Rohr ausgeführt wird.

## Revendications

1. Procédé d'application d'un manchon thermorétractable (10) sur une portion d'un tuyau (2), le procédé comportant les étapes suivantes :
- la fourniture d'un tuyau (2),
- la disposition d'un manchon thermorétractable (10) autour d'une portion du tuyau (2),
- la disposition d'un appareil d'apport de chaleur (12) autour du tuyau (2) dans la région du manchon (10), l'appareil d'apport de chaleur (12) comportant au moins trois dispositifs de chauffage (20) disposés à des positions différentes le long de l'axe du tuyau (2), de sorte qu'un premier dispositif de chauffage (20c) est positionné plus près du centre du manchon (10), dans la direction axiale, que les deuxième (20a) et troisième (20e) dispositifs de chauffage, le second dispositif de chauffage (20a) est positionné dans la région d'une première extrémité du manchon (10), et le troisième dispositif de chauffage (20e) est positionné dans la région d'une seconde extrémité du manchon (10) opposée à la première extrémité, et
- l'exploitation des premier (20c), deuxième (20a) et troisième (20e) dispositifs de chauffage pour appliquer de la chaleur au manchon thermorétractable (10), dans lequel
pendant la thermorétraction du manchon (10), le procédé comporte l'étape de captage de la température du manchon (10) ou dans la région du manchon (10), puis l'utilisation de la température ainsi captée pour commander le pilotage d'au moins l'un des dispositifs de chauffage (20) ; et
**caractérisé en ce que** les éléments chauffants de chacun desdits au moins trois dispositifs de chauffage (20) sont sous la forme d'une pluralité de chauffages infrarouges, dans lequel chaque chauffage infrarouge est un panneau avec une face chauffante plate.

2. Procédé selon la revendication 1, dans lequel le procédé comporte la commande individuelle de chacun des premier, deuxième et troisième dispositifs de chauffage pour appliquer de la chaleur au manchon thermorétractable.

3. Procédé selon l'une quelconque des revendications précédentes, dans lequel le procédé comprend la fourniture d'une unité de commande qui commande le chauffage du manchon en dépendance de la température captée du manchon.

4. Procédé selon la revendication 3, dans lequel l'appareil d'apport de chaleur comprend une pluralité de pyromètres et la durée exacte de chauffage, et la puissance à laquelle la chaleur est apportée, est commandée par l'unité de commande en dépendance de la température des régions du manchon telle que captée par les pyromètres prévus dans ce but.

5. Procédé selon l'une quelconque des revendications précédentes, dans lequel les dispositifs de chauffage sont commandés pour provoquer le chauffage du manchon jusqu'à ce que le manchon ou une région proche du manchon atteigne une température prédéterminée, puis pour maintenir un profil de température prédéterminé au fil du temps.

6. Procédé selon l'une quelconque des revendications précédentes, comprenant l'application d'une chaleur plus importante au manchon à une première position circonférentielle par rapport à une seconde position circonférentielle le long d'au moins la majorité de la longueur du manchon.

7. Procédé selon l'une quelconque des revendications précédentes, dans lequel chaque dispositif de chauffage comporte des éléments chauffants disposés de manière circonférentielle autour de l'axe de l'appareil lorsque l'appareil d'apport de chaleur est disposé autour du tuyau.

8. Procédé selon l'une quelconque des revendications précédentes, dans lequel le procédé est exécuté de manière à générer de la chaleur sur l'ensemble du manchon thermorétractable sans déplacer l'appareil d'apport de chaleur le long du manchon.

9. appareil d'apport de chaleur (12) pour chauffer un manchon thermorétractable (10) autour d'une portion d'un tuyau (2) pendant un procédé de pose d'une canalisation, dans lequel
l'appareil d'apport de chaleur (12), en utilisation, a un axe pouvant être aligné pour coïncider avec l'axe longitudinal de la portion du tuyau (2), et
l'appareil d'apport de chaleur (12) comporte au moins trois dispositifs de chauffage (20) disposés de telle sorte que, en utilisation, le premier dispositif de chauffage (20c) soit positionné entre le deuxième (20a) et le troisième (20e) dispositif de chauffage dans la direction de l'axe de l'appareil, chacun des premier (20c), deuxième (20a) et troisième (20e) dispositifs de chauffage étant disposé de telle sorte que, en utilisation, le dispositif de chauffage comporte des éléments chauffants disposés de manière circonférentielle et symétrique autour de l'axe de l'appareil, l'appareil d'apport de chaleur (12) comporte une unité de commande pour commander l'exploitation desdits au moins trois dispositifs de chauffage, lesdits au moins trois dispositifs de chauffage (20) étant disposés pour être alimentés électriquement sous la commande de l'unité de commande ; et
dans lequel
l'appareil d'apport de chaleur (12) comprend un ou plusieurs capteurs de température (24) configurés pour capter la température du manchon (10) ou dans la région du manchon (10) ; et
l'unité de commande est configurée pour commander le chauffage du manchon (10) en dépendance de la température ainsi captée, et **caractérisé en ce que** les éléments chauffants de chacun desdits au moins trois dispositifs de chauffage (20) se présentent sous la forme d'une pluralité de chauffages à infrarouge, par exemple dans lequel chaque chauffage à infrarouge est un panneau avec une face chauffante plate.

10. appareil d'apport de chaleur selon la revendication 9, dans lequel chaque élément chauffant peut être commandé individuellement par l'unité de commande.

11. appareil d'apport de chaleur selon l'une quelconque des revendications 9 ou 10, comportant en outre
une structure de montage sur panneau associée à chaque panneau de chauffage à infrarouge, dans lequel
chaque panneau comporte un connecteur d'alimentation connecté à un connecteur d'alimentation correspondant de la structure de montage sur panneau, et
chaque panneau est monté de manière amovible sur la structure de montage sur panneau.

12. appareil d'apport de chaleur selon l'une quelconque des revendications 9 à 11, dans lequel l'appareil d'apport de chaleur est disposé et configuré pour exécuter le procédé de l'une quelconque des revendications 1 à 8.

13. Procédé selon l'une quelconque des revendications 1 à 8, dans lequel l'étape de disposition d'un appareil d'apport de chaleur autour du tuyau dans la région 25 du manchon est exécutée en disposant un appareil d'apport de chaleur selon l'une quelconque des revendications 9 à 11 autour du tuyau.
